(19) **Europäisches Patentamt European Patent Office Office européen des brevets**

(11) **EP 1 016 852 B1**

(12) **EUROPEAN PATENT SPECIFICATION**

(45) Date of publication and mention
of the grant of the patent:
**27.02.2008 Bulletin 2008/09**

(51) Int Cl.:
*G01D 5/14* *(2006.01)* *G01D 5/16* *(2006.01)*

(21) Application number: **99125788.2**

(22) Date of filing: **23.12.1999**

(54) **Apparatus for measuring the position of a movable member**

Positionssensor

Capteur de position

(84) Designated Contracting States:
**DE FR GB IT**

(30) Priority: **31.12.1998 US 223943**

(43) Date of publication of application:
**05.07.2000 Bulletin 2000/27**

(73) Proprietor: **PacSci Motion Control, Inc.
Wilmington,
Massachusetts 01887 (US)**

(72) Inventor: **Yundt, George B.
Cambridge, MA 02139 (US)**

(74) Representative: **Feldkamp, Rainer et al
Garmischer Strasse 4
80339 München (DE)**

(56) References cited:
WO-A-97/35793  DE-A- 3 339 162
GB-A- 2 143 328  US-A- 5 159 268
US-A- 5 363 034

EP 1 016 852 B1

Printed by Jouve, 75001 PARIS (FR)

**EP 1 016 852 B1**

**Description**

FIELD OF THE INVENTION

The present invention relates to magnetic position encoders, and more particularly to magnetic position encoders utilizing mechanically shaped, magnetic field generating disks to optimize the resulting magnetic field pattern.

BACKGROUND OF THE INVENTION

Many applications require instantaneous information regarding the linear or angular position of one element relative to another. For example, it is often desirable to measure the position of a rotating shaft with respect to a fixed reference, such as a stator holding the shaft bearings. Devices that measure such an angular position are well known in the art and include resolvers, optical encoders, magnetic encoders, rotary potentiometers, and others. Such devices, known for example as position encoders or position sensing devices, all have various economic and performance trade-offs. In particular, the least expensive high resolution position sensing devices are typically incremental as opposed to absolute. An incremental position sensing device is characterized by the fact that it only produces positional information regarding a movable member in the form of a quantized change from the previous position. The resolution of the device is defined by the smallest quantum of positional change that the sensing device can indicate (i.e., an angular increment for rotational sensing device or lineal increment for a linear sensing device). Such devices typically incorporate associated electronics that require external power. Once power is applied to the associated electronics of an incremental position sensing device, the device can begin producing incremental position information. By utilizing appropriate interface electronics (e.g., an accumulator), such sensors can keep track of how far the movable member has traveled since external power has been applied, but the absolute position is unknown, because the device has no information regarding the position of the movable member at the time the power was applied.

Prior art absolute position sensing devices operate by producing a magnetic field that is fixed relative to the movable member, and sensing the magnetic field at a fixed reference position (relative to the movable member) as the movable member travels through its range of motion. In such absolute position sensing devices for sensing the angular position of a rotatable shaft, the magnetic field is generated by a permanently magnetized disk, fixedly mounted to the shaft. The fixed sensor produces a discrete output at the maxima of the detected magnetic field. Ideally, the field variation detected by the fixed sensor is sinusoidal, with the maxima occurring at the poles of the magnetized disk. One disadvantage to such a sensing device is that the sinusoidal field detected at the fixed sensor tends to be distorted, i.e., the detected waveform includes higher order harmonics, in addition to the desired fundamental sinusoid. This distortion introduces an error in the estimate of position.

Documents GB-A-2 143 328, DE-A-3339162 and US-A-55159268 disclose rotary position sensing devices, WO 97/35793 discloses a proximity sensor and US -A- 5363034 discloses a position detector.

It is an object of this application to provide a position encoder that substantially overcomes or reduces the aforementioned disadvantages while providing other advantages which will be evident hereinafter.

SUMMARY OF THE INVENTION

The present invention is an apparatus for indicating the instantaneous position of a movable member, movable along a range of motion with respect to a reference position. The apparatus includes a magnetic body that is fixedly attached to the movable member. The body has a contoured surface and produces a magnetic field. The apparatus further includes at least two magnetic field sensors. Each of the sensors is disposed adjacent to the contoured surface of the magnetic body, fixed with respect to the reference position, and is positioned apart from the other sensors, so as to form a non-uniform gap between the contoured surface and each of the magnetic field sensors. Each of the sensors produces a position dependent signal corresponding to the value of the magnetic field. The apparatus further includes a decoding circuit electrically coupled to each of the magnetic field sensors so as to receive each of the position dependent signals. The decoding circuit produces a position dependent signal that is a predetermined function of the magnetic field sensor position dependent signals.

In one preferred embodiment, the magnetic field sensors include at least two sets of two magnetic field sensors, so as to provide electrically redundant position dependent signals.

In yet another embodiment, the gap is tailored to vary as a periodic non-uniform function between $g_{max}$ and $g_{min}$ and having an inverse sinusoidal component.

In another embodiment, the non-uniform gap is tailored so as to produce a sinusoidal variation with the position of the movable member with respect to the reference point.

In one embodiment, the magnetic body is selected from the group consisting of a permanent magnet, an electromagnet, a high mu material, or non-magnetic materials, or a combination thereof.

In another embodiment, the magnetic body is rotatable and includes N magnetic poles, where N is preferably an integer evenly divisible by four so that redundant magnetic field sensors can be incorporated.

In another embodiment, the movable member and the magnetic body are combined so as to include a single magnetic member.

In another embodiment, each of the magnetic field sensors further includes at least one adjustment screw disposed substantially adjacent to the magnetic field sensor so as to interact with the magnetic field. The position dependent signal amplitude varies as a predetermined function of a relative distance from the magnetic field sensor to the adjustment screw. The adjustment screw includes a high magnetic permeability material.

In another embodiment, the magnetic field sensors include linear Hall effect sensors.

In another embodiment, the movable member includes a shaft rotatable about a rotation axis, and a disk having an outer periphery defined by a non-uniform radius. The disc is fixedly attached to the shaft at the disc center such that the disk rotates within a plane substantially normal to the rotation axis. The magnetic body is fixedly attached to the disk, and the magnetic field sensors are disposed about the outer periphery at substantially equal radii with respect to the rotational axis.

In another embodiment, the apparatus further includes two sets of three magnetic field sensors disposed at angular intervals substantially equal to 120 degrees.

In another embodiment, the movable member includes an elongated object movable along a linear axis. The elongated object has at least one exterior surface substantially parallel to the linear axis, and the magnetic field sensors are disposed along the exterior surface at substantially equal radial distances with respect to the linear axis.

BRIEF DESCRIPTION OF THE DRAWINGS

The foregoing and other objects of this invention, the various features thereof, as well as the invention itself, may be more fully understood from the following description, when read together with the accompanying drawings in which:

FIG. 1A illustrates an end schematic view of one preferred embodiment of an improved angular position encoder;
FIG. 1B illustrates a side schematic view of the FIG. 1A embodiment;
FIG. 2 illustrates a schematic view of one preferred embodiment of an improved linear position encoder;
FIG. 3A illustrates an end schematic view of one preferred embodiment of an improved angular position encoder; and
FIG. 3B illustrates a side schematic view of the FIG. 3A embodiment.

DETAILED DESCRIPTION OF THE INVENTION

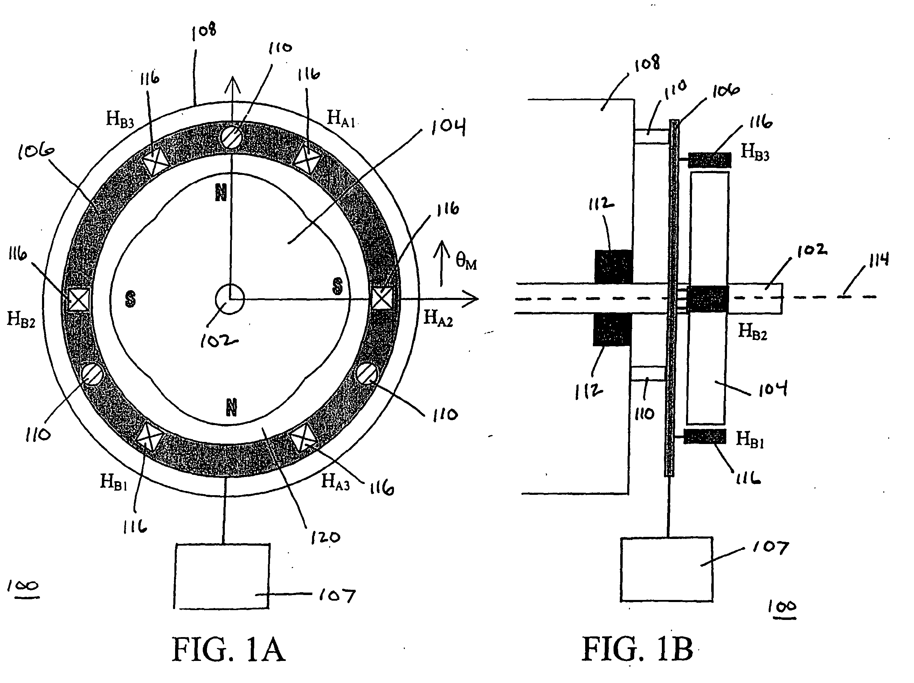

The invention is directed to an improved position encoder, also referred to by the Applicant as the "G-coder". FIGs. 1A and 1B illustrate orthogonal schematic views of one preferred embodiment of an improved position encoder 100 that may be used to measure angular position of an object with respect to a fixed reference position (e.g., rotational angle $\theta_M = 0$), including a shaft 102, a shaped disc 104 fixedly attached to the shaft 102, a magnetic field sensor ring 106 concentric with the disc 104 and the shaft 102, and a decoder circuit 107 electrically coupled to the sensor ring 106. The sensor ring 106 is fixedly mounted to the stator housing 108 via ring mounting supports 110. The stator housing 108 supports the bearings 112 that rotatably secure the shaft 102 to the stator housing 108.

The disc 104 mounted on the shaft 102 includes a magnetic material disc having a predetermined magnetic field characteristic. This field characteristic may include a substantially constant magnetic field, produced for example by permanent magnet or a conductor carrying a direct current. Alternately, the predetermined field characteristic may include a magnetic field having a time varying amplitude that varies in a predetermined manner, e.g., sinusoidal amplitude modulation, as the shaft rotates. In one embodiment, the magnetic material disc 104 is fabricated entirely from one of several permanent magnet materials known to those in the art, or a combination thereof. In alternate embodiments, the magnetic material disc 104 includes a permanent magnet, an electro-magnet, a high mu material (i.e., a material having a relatively high magnetic permeability), or non-magnetic materials, or a combination thereof (e.g., for a hub to mount the disc onto the shaft). In another embodiment, the magnetic field originates from an electro-magnet, driven synchronously by a sinusoidal source, to produce an amplitude modulated magnetic field. In all of the preferred embodiments, the disk 104 produces a magnetic field that varies spatially with respect to shaft rotation angle $\theta$. In FIG. 1, the magnetic field produced by the disk 104 is radially oriented with respect to the shaft axis of rotation 114. In an alternate embodiment, the shaft 102 and the disc 104 may be combined or integrated to form a single component that produces a magnetic field.

The magnetic field sensor ring 106 includes a plurality of magnetic field sensors 116 distributed about the shaft 102. The magnetic field sensors 116 linearly measure the value of the magnetic field produced by the magnetic material disc 104. In the illustrative embodiment of FIG. 1, each of the six independent magnetic field sensors 116 measures the radial component of the magnetic field produced by the disc 104, and substantially rejects components of the magnetic field orthogonal to the radial component. In a preferred embodiment, the magnetic field sensors 116 include linear Hall effect type sensors, although alternate embodiments may include other magnetic sensors known to those in the art.

The rotational nature of the structure shown in FIG. 1 causes the output from a given magnetic field sensor to be periodic as a function of the rotational angle $\theta_M$. Any periodic function can be decomposed into its harmonic terms via a Fourier Series, which is repeated below for reference:

$$Y_{A1}(\theta_M) = \sum_{n=-\infty}^{+\infty} \left[ A_n \cos(n\theta_M) + B_n \sin(n\theta_M) \right]$$

The output of the other magnetic field sensors would ideally be given by $Y_{A1}(\theta_M - \theta_O)$ where $\theta_O$ is determined by the angular distance between the magnetic field sensors.

To illustrate how the embodiment of the invention shown in FIG. 1 measures the shaft mechanical angle, assuming there are only two magnetic field sensors on the sensor ring 106 separated by 45 mechanical degrees instead of six magnetic field sensors 116 being distributed about the sensor ring 106 at intervals of 60 mechanical degrees, as shown. Then, given appropriate magnetic material disc magnetization and air gap shape, the outputs of the two sensors are given by:

$$Y_{A1}(\theta_M) = A\cos(2\theta_M)$$

$$Y_{A2}(\theta_M) = A\sin(2\theta_M)$$

The angle $\theta$ is easily determined when both the cosine and sine of $\theta$ are known. Thus, for a system with two magnetic field sensors, is it possible to uniquely determine $2\theta_M$, i.e., determine the absolute angular position of the shaft within one half of a mechanical revolution. Circuitry to perform this function within the decoder circuit 107 is well known for interfacing to resolvers, which have the cosine sine output signal format given above, except for being amplitude modulated by a carrier. U.S. Patent No. 5,162,798, entitled RESOLVER TO DIGITAL CONVERTER, invented by Yundt, discloses an example of such an angle conversion apparatus.

Note that the sensor output signals, $Y_{Ax}$ (where x = 1, 2, etc.), do not have to be purely sinusoidal. A decoding circuit 107 could be constructed for any a priori sensed magnetic wave shape, as long as the generalized function of the output of all the magnetic field sensors taken together is a single valued function of the position. The pure sinusoidal case is shown in the illustrative embodiment because it is one of the simpler magnetic wave shapes to decode. In another embodiment, the sensor output could be in the form of a triangle wave, e.g., vary the sensed magnetic field linearly from minus **B$_o$** to plus **B$_o$** over 180 electrical degrees and visa versa over the next 180 electrical degrees.

If the desired result is a pure sinusoid and the resulting output from the magnetic field sensor does have some distortion, then additional magnetic field sensors can be used to partially cancel that distortion. Consider the case shown in FIG. 1A which includes three magnetic field sensors 116 (H$_{A1}$, H$_{A2}$ and H$_{A3}$) spaced at intervals of 120 electrical degrees. (Note that because the disk 104 includes a magnetic pole every 90 mechanical degrees, one mechanical degree corresponds to two electrical degrees for angular measurement about the rotation axis 114 with respect to a fixed reference point. Thus, placing the magnetic field sensors 116 about the disk at intervals of 120 electrical degrees is equivalent to placing the magnetic field sensors about the disk at intervals of 60 mechanical degrees.) If the $Y_{Ax}$ output signals are purely sinusoidal with third harmonic distortion, then by looking at the line-line output signal (i.e., the difference signal between any two sensors), the third harmonic distortion term may be canceled. For example, consider $Y_{A1} - Y_{A2}$ for the disk shape and sensor placement of FIG. 1A:

$$Y_{A1}(\theta_M) - Y_{A2}(\theta_M) = [A\cos(2\theta_M) + B\sin(6\theta_M)] - \{A\cos[2(\theta_M + 2\pi/3)] + B\sin[6(\theta_M + 2\pi/3)]\}$$

$$= [A\cos(2\theta_M) + B\sin(6\theta_M)] - \{A\cos[2(\theta_M + 2\pi/3)] + B\sin[6\theta_M + 4\pi]\}$$

$$= A\cos(2\theta_M) - A\cos[2(\theta_M + 2\pi/3)]$$

Thus, the third harmonic distortion term for a line-line signal is canceled. In fact, any distortion term representing a harmonic number divisible by three would be canceled by this technique. More generally, for two magnetic field sensors placed $2\pi/N$ electrical degrees apart, N being an integer, the line-line output signal rejects any harmonic distortion term which is an integer multiple of N. Note that looking at sensors line-line also has the advantage of greatly helping to reject any common mode noise that might be injected into the signal over the cable between the magnetic field sensors 116 and the associated decoding electronics 107.

The six magnetic field sensors 116 shown in FIG. 1A are set at the same radial distance from the shaft and they are spaced at equal 60 mechanical degree intervals about the periphery of the disc 104. These six magnetic field sensors 116 are segregated into two groups of three; the three on the right side of FIG. 1A ($H_{A1}$, $H_{A2}$ and $H_{A3}$) and the three on the left side of FIG. 1A ($H_{B1}$, $H_{B2}$ and $H_{B3}$) form these two groups. Each of these groups forms a fully functional sensor output that may be used to determine the absolute angular position of the shaft within one half of a complete mechanical revolution. The dual electrical outputs from the two sets of sensors of this embodiment provides redundancy that may be used to form a high reliability system. In addition, using three magnetic field sensors 116 in each group instead of the minimum requirement of two per group allows redundancy within the set. For a fully functioning system, the three magnetic field sensor outputs from each group form a balanced three-phase waveform set, and the sum of the three signals $Y_{A1} + Y_{A2} + Y_{A3}$ should equal 0. A non-zero sum may be interpreted by the decoder circuitry 107 to detect faulty hardware.

The goal of the magnetic design of the magnetic material disc 104 and the geometric placement of the magnetic field sensors 116 is to create the desired $Y(\theta_M)$ on the output of the magnetic field sensors 116. It is theoretically possible with a sufficiently complex magnetizing fixture and magnetizing process to completely tailor the magnetic field of a uniform radius permanent magnet magnetic material disc 104. However, the such a magnetizing fixture design can be extremely complex, and the magnetizing process can be quite variable and hard to control, providing inconsistent results. In one embodiment of the invention, the magnetization fixture design is simplified, and the process variabilities are reduced, by incorporating a variable air gap between the magnetic material disc 104 and the magnetic field sensors 116 as another way to control the shape of the magnetic field.

For the simple case of a magnetic material disc 104 including a permanent magnet, and the desired $Y(\theta_M)$ being a sinusoid, it is useful to design the radial air gap between the edge of the magnetic material disc and the magnetic field sensor so that the inverse of the radial air gap distance includes a sinusoidally varying component. This inverse relationship follows from the desire to have a sinusoidally varying component in the air gap permeability, and the fact that magnetic permeability is inversely proportional to the air gap distance. Define the following terms as:

$R_o$ ->      radial distance from shaft to magnetic field sensors
$P$ ->      number of magnetic pole pairs
$g(\theta_M)$ ->      air gap distance from the magnetic material disc surface to the magnetic field sensor
$R_M(\theta_M)$ ->      radius of magnetic material disc
$g_{min}$ ->      minimum air gap
$g_{max}$ ->      maximum air gap

Then, the air gap distance is:

$$g(\theta_M) = (2\, g_{min}\, g_{max})\,/\{(\,g_{max} - g_{min})\sin(P\theta_M) + (\,g_{max} + g_{min})\}$$

$$g(-\pi/2) = g_{max}$$

$$g(0) = (2\, g_{min}\, g_{max})\,/\{(\,g_{max} + g_{min})$$

$$g(-\pi/2) = g_{min}$$

The radius of the magnetic material disc is just the magnetic field sensor radius minus the air gap distance, i.e.:

$$R_M(\theta_M) = R_o - g(\theta_M)$$

Holding the desired magnetic field sensor radius $R_o$ constant, the minimum and maximum gap values are then iterated until the resulting field exhibits the desired sinusoidal shape and amplitude. The magnetizing fixture for this magnetic material disc would be P crossed solenoidal fields. In another embodiment, the magnetic circuit may be closed by a return path concentric to the shaft and at a larger radius than the magnetic field sensors to increase the magnetic field strength and to make the relative effect of the air gap variation with position stronger. The return path may include high mu material, or other magnetically permeable material,

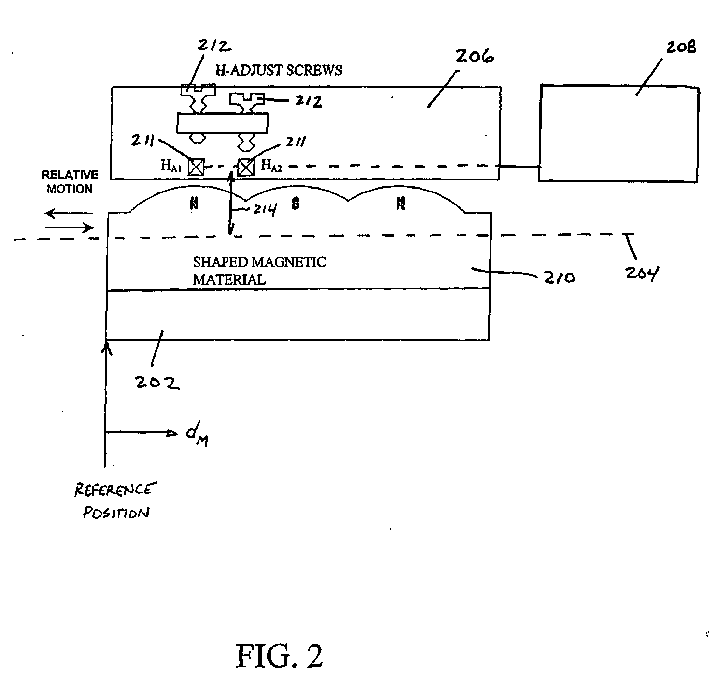

FIG. 2 shows another embodiment of the an improved position encoder 200. The embodiment of FIG. 2 may be used to measure the linear position of an object with respect to a fixed reference position (e.g., position offset distance $d_M = 0$), and includes an elongated object 202 movable along a linear axis 204, a sensor assembly 206, and a decoder circuit 208 electrically coupled to the sensor assembly. The elongated object 202 includes a magnetic material component 210 having a predetermined magnetic field characteristic. This field characteristic may include a substantially constant magnetic field, produced for example by permanent magnet or a conductor carrying a direct current. Alternately, the predetermined field characteristic may include a magnetic field having a time varying amplitude that varies in a predetermined manner, e.g., sinusoidal amplitude modulation. In one embodiment, the magnetic material component 210 is fabricated entirely from one of several permanent magnet materials known to those in the art, or a combination thereof. In alternate embodiments, the magnetic material component 210 includes a permanent magnet, an electro-magnet, a high mu material (i.e., a material having a relatively high magnetic permeability), or non-magnetic materials, or a combination thereof (e.g., for a hub to mount the disc onto the shaft). In another embodiment, the magnetic field originates from an electro-magnet, driven synchronously by a sinusoidal source, to produce an amplitude modulated magnetic field. In yet another embodiment, the elongated object 202 and the magnetic material component may be combined or integrated to form a single movable component that produces a magnetic field. In all of the preferred embodiments, the magnetic material component 210 produces a magnetic field that varies spatially with respect to the linear offset position $d_M$ of the elongated object 202 along the linear axis 204. In FIG. 2, the magnetic field produced by the magnetic material component 210 is oriented in a direction substantially normal to the linear axis 204.

As with the rotary example of FIG. 1, the magnetic material is shaped to vary the air gap between the magnetic material and the magnetic field sensor as the elongated object 202 moves, so that the magnetic field shape sensed by the magnetic field sensor can be controlled with greater accuracy and predictability than via a conventional magnetizing fixture. Similar to the rotary example of FIG. 1, the linear form of the invention includes multiple magnetic field sensors 211 distributed along the sensor assembly 206 at intervals of less than 180 electrical degrees and positioned at a sensor offset position 214. The decoding circuit 208 receives the position dependent signals from the magnetic field sensor 211 outputs and processes the position dependent signals to extract the linear position information in a manner analogous to that described herein for the rotary example of FIG. 1.

FIG. 2 also shows a simple way to correct for variations in magnetic field sensor output amplitudes. Output amplitude variation between the magnetic field sensor outputs can be caused by imperfections in the magnetic field sensor scale factor or by variation in the distance between the magnetic field sensor and the magnetic body. Although shown herein only for the linear case, this correction method may also be used for the rotary position encoder application. High magnetic permeability adjustable slugs or screws 212 (hereinafter referred to as "H-adjust screws"), fabricated from a high permeability material known to those in the art such as iron, steel, cobalt, nickel, ferrites, mu metal, various alloys or combinations thereof, are mounted behind the magnetic fields sensors in line with the field being sensed. If a particular sensor output is lower than desired, then the screw 212 is adjusted to be positioned closer to the back of the sensor, so that the screw 212 increases the flux density at that sensor. If a particular sensor output is higher than desired, then the screw 212 is adjusted to be positioned further away from the back of the sensor, so that the screw 212 decreases the flux density at that sensor. The gain variation caused by the non-ideal magnetic field sensor may be mitigated via electronic calibration in the sensor assembly 206 or in the decoding circuit 208. However, correcting the gain on the magnetic field sensor assembly 206 via electronic calibration is typically more expensive than the H-adjust screws shown in this embodiment, and correcting the gain variation in the decoding circuit 208 requires that the sensor assembly 206 and the decoding circuitry 208 be calibrated together. Using the H-adjust screws or electronic adjustment on the magnetic field sensor assembly 206 allows sensors and decoders to be readily interchanged, and still have the interchanged sets be calibrated.

There can also be measurement errors caused by incorrect location of the magnetic field sensors in a direction parallel to the relative motion, i.e. perpendicular to the air gap. In Figure 2 this error occurs if the distance between the two sensors does not match ¼ of the pitch between consecutive North poles. In Figure 1 this error occurs if the angular distance between consecutive sensors is not exactly 120 electrical degrees.

Consider the case shown in Figure 1 where the location of $H_{A2}$ is assumed arbitrarily to be exactly $\pi/3$ in

electrical degrees. $H_{A1}$ and $H_{A3}$ are assumed to be misplaced from the ideal $2\pi/3$ electrical degree spacing by $\theta_1$ and $\theta_3$ respectively. With H-adjust screws, or appropriate electrical adjustment, each of the three sensor output amplitudes can be adjusted individually. If the position decoding electronics uses two line-line outputs, then the three sensor gain adjustments can be used to set the two line-line amplitudes to the desired value and to correct for the non-ideal angular locations.

To prove that the line-line output amplitudes and the relative phase shift between the two line-line outputs can be calibrated first define the define the individual signals and the line-line quantities.

$$\theta_E = P*\theta_M + \pi/3$$

where P is the magnetic pole pair count

$$Y_{A1}(\theta_E) = A_1\cos(\theta_E + \pi/3 + \theta_1)$$

$$Y_{A2}(\theta_E) = A_2\cos(\theta_E - \pi/3)$$

$$Y_{A3}(\theta_E) = A_3\cos(\theta_E - \pi + \theta_3)$$

$$X_{A1}(\theta_E) = Y_{A1}(\theta_E) - Y_{A2}(\theta_E)$$

$$X_{A2}(\theta_E) = Y_{A2}(\theta_E) - Y_{A3}(\theta_E)$$

Now use the desired amplitude match and the desired 120 electrical degree phasing to relate the two line-line signals.

$$X_{A2}(\theta_E + 2\pi/3) = X_{A1}(\theta_E)$$

$$A_2\cos(\theta_E - \pi/3 + 2\pi/3) - A_3\cos(\theta_E - \pi + \theta_3 + 2\pi/3) = A_1\cos(\theta_E + \pi/3 + \theta_1) - A_2\cos(\theta_E - \pi/3)$$

$$A_2[\cos(\theta_E + \pi/3) + \cos(\theta_E - \pi/3)] = A_1\cos(\theta_E + \pi/3 + \theta_1) + A_3\cos(\theta_E - \pi/3 + \theta_3)$$

$$A_2[(2/2)\cos(\theta_E)] = A_1\cos(\theta_E)\cos(\pi/3 + \theta_1) + A_3\cos(\theta_E)\cos(-\pi/3 + \theta_3) + $$
$$- A_1\sin(\theta_E)\sin(\pi/3 + \theta_1) - A_3\sin(\theta_E)\sin(-\pi/3 + \theta_3)$$

Since sine and cosine are orthogonal functions, then the above can be separated into two simultaneous equations.

$$A_2 = A_1\cos(\pi/3 + \theta_1) + A_3\cos(-\pi/3 + \theta_3)$$

$$0 = - A_1\sin(\pi/3 + \theta_1) - A_3\sin(-\pi/3 + \theta_3)$$

It should be appreciated that the correction can be provided with the decoding circuitry.

Although the above analysis has been described in connection with the FIGS 1A and 1B rotary embodiment, the same mathematical analysis applies to the FIG. 2 linear embodiment.

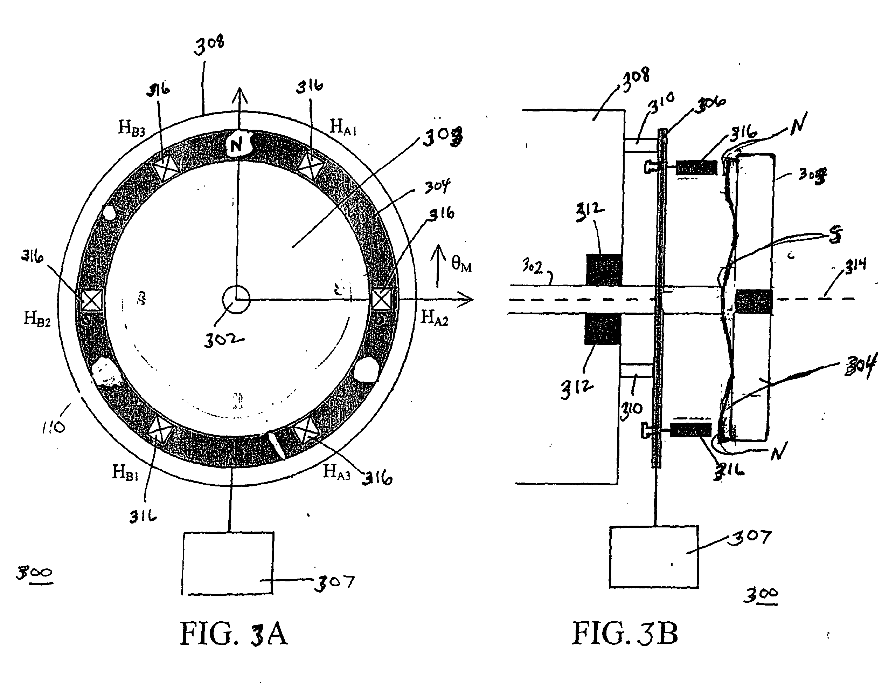

The principles of the present invention can be applied to other arrangements. For example, a second preferred embodiment of the rotary position encoder is shown in FIGs. 3A and 3B, the latter illustrating orthogonal schematic views of a second preferred embodiment of an improved position encoder 300 for measuring the angular position of an object with respect to a fixed reference position (e.g., rotational angle $\theta_M = 0$). This embodiment includes a shaft 302, a disc 303 fixedly attached to the shaft 302 and supporting a "ring" magnet 304, a magnetic field sensor ring 306 axially spaced from the disc 304, and a decoder circuit 307 electrically coupled to the sensor ring 306. The sensor ring 306 is fixedly mounted to the stator housing 308 via ring mounting supports 310 and support a plurality of magnetic field sensors 316. The stator housing 308 supports the bearings 312 that rotatably secure the shaft 302 to the stator housing 308. In this embodiment the "ring" has a mean diameter (the average diameter between the inner and outer diameters of the ring) so that the magnetic field sensors 316 are axially spaced adjacent to the ring as the disk 303 rotates about its axis. The confronting surface of the ring magnet is contoured so as to provide the non-uniform gap as prescribed in accordance with the present invention, so as to produce a sinusoidal variation with the rotational position of the disk. The thickness of the ring varies from a maximum thickness (providing the minimum air gap, $g_{min}$) to a minimum thickness (providing the maximum air gap, $g_{max}$). The ring would be magnetized so that the maximum thickness locations provide alternating north and south poles of the magnet, while the minimum thickness locations provide zero magnetic flux. In this regard it should be appreciated that the term "ring magnet" as used herein includes a substantially annular structure in which the minimum thickness parts of the ring include any minimum thickness include zero. Further, measurement errors caused by incorrect location of the magnetic field sensors can be corrected in the same manner as described above, with H-adjust screws as shown, or appropriate electrical adjustment.

The invention may be embodied in other specific forms without departing from the spirit or essential characteristics thereof. The present embodiments are therefore to be considered in respects as illustrative and not restrictive, the scope of the invention being indicated by the appended claims rather than by the foregoing description, and all changes which come within the meaning and range of the equivalency of the claims are therefore intended to be embraced therein.

**Claims**

1.  An apparatus for providing an output indicative of the instantaneous position of a movable member (102;202;302) along a range of motion with respect to a reference position, comprising:

    a magnetic body (104;210;304) being fixedly attached to said movable member (102;202;302), said body having a contoured surface and producing a magnetic field;
    at least two magnetic field sensors, each of said sensors being (i) disposed adjacent to said contoured surface of said magnetic body (104;210;304), (ii) fixed with respect to said reference position, and (iii) positioned apart from said other sensor, so as to form a non-uniform gap between said contoured surface and each of said magnetic field sensors (116;211;316)
    output means (107;208;307) electrically coupled to each of said magnetic field sensors (116;211;316)

    **characterized in that**:

    said at least two magnetic field sensors include at least two independent sets of magnetic field sensors (116; 211;316) each set comprising at least two sensors, wherein each of said sensors produces a position dependent signal corresponding to a value of said magnetic field and each independent set of sensors is electrically isolated from the other sets of sensors so as to provide electrically redundant position dependent signals:

       said output means forming a decoding circuit (107;208;307) electrically coupled to each of said magnetic field sensors (116;211;316) so as to receive each of said position dependent signals, said decoding circuit (107;208;307) producing an output indicative of the instantaneous position of the movable member (102; 202;302) with respect to the reference position.

2. An apparatus according to claim 1, said non-uniform gap being tailored so that the magnetic field sensor output signal varies as a function of sinX, where X is a linear function of said position of said movable member (102;202; 302) with respect to said reference point.

3. An apparatus according to claim 1 or 2, said magnetic body (104;210;304) including N magnetic poles, where N is an integer evenly divisible by four.

4. An apparatus according to claim any of the claims 1 - 3, wherein said movable member (102;202;302) and said magnetic body (104;210;304) are combined so as to include a single magnetic member.

5. An apparatus according to any of the claims 1 - 4, wherein the magnetic body (104;304)is a ring that rotates with the movable member (102;302).

6. An apparatus according to claim 5, wherein the magnetic sensors (116;316) are each axially spaced from the ring.

7. An apparatus according to any of the preceding claims, each of said magnetic field sensors (116;211;316) further including at least one adjustment screw (212) disposed substantially adjacent to said magnetic field sensor so as to interact with said magnetic field, wherein siad position dependent signal varies as a predetermined function of a relative distance from said magnetic field sensor (116;211;316) to said adjustment screw (212).

8. An apparatus according to claim 7, wherein said adjustment screw (212) includes a high magnetic permeability material.

9. An apparatus according to any of the preceding claims, wherein said magnetic field sensors (116;211,316) include linear Hall effect sensors.

10. An apparatus according to any of the preceding claims, wherein

i) said movable member includes a shaft rotatable (102;302) about a rotation axis (114;314), and a disc (104; 304) having an outer periphery defined by a non-uniform radius, said disc (104;304) being fixedly attached to said shaft (102;302) at a disc center such that said disc rotates within a plane substantially normal to said rotation axis, said magnetic body being fixedly attached to said disc; and
ii) said magnetic field sensors (116;316) are disposed about said outer periphery at substantially equal radii with respect to said rotational axis (114;314).

11. An apparatus according to claim 10, further including two sets of three magnetic field sensors (116;316) disposed at angular intervals substantially equal to 120 degrees.

12. An apparatus according to claim 11, wherein said predetermined function of said position dependent signals includes a difference between two said sensors (116;316) in either of said sets of three magnetic field sensors, so as to substantially cancel a 3N harmonic distortion term, N being an integer greater than or equal to one.

13. An apparatus according to any of the claims 1 - 9, wherein

i) said movable member (202) includes an elongated body (210) movable along a linear axis (204), said elongated object having at least one exterior surface substantially parallel to said linear axis; and
ii) said magnetic field sensors (211) are disposed at substantially equal radial distances with respect to said linear axis such that a gap is formed between each sensor (211) and the exterior surface of the elongated body (210) when the elongated body (210) moves past the sensor (211).

14. An apparatus according to any of the preceding claims, further including measurement correction (212) of measurement errors caused by incorrect location of the magnetic field sensors.

15. A method of calculating an air gap distance between a magnetic field sensor (116;316) and a magnetic disc (104;

304) of a rotary position encoding apparatus, so as to produce a magnetic field having a substantially sinusoidal characteristic at said sensor (116;316) as said disc rotates (104;304) past said sensor, said disc having a center and a perimeter, and being disposed within a plane, each point on said perimeter being defined by an angle $\Theta_M$ measured from a reference radius, comprising the steps of:

defining a maximum air gap distance $g_{max}$ from said sensor (116;316) to said disc (104;304), a minimum air gap distance $g_{min}$ from said sensor to said disc, and a desired sensor radius from said center to said sensor; defining a general air gap distance formula being a function of said maximum air gap distance and said minimum air gap distance, and such that said general air gap distance includes a sinusoidally varying component; holding said desired sensor radius constant while iterating said maximum air gap distance and said minimum air gap distance until said magnetic field exhibits said substantially sinusoidal characteristic.

16. A method according to claim 15, further including the step of providing a general air gap distance formula of the form:

$$g(\Theta_M) = (2\, g_{min}\, g_{max})/\{(g_{max} - g_{min})\sin(P\Theta_M) + (g_{max} + g_{min})\},$$

where $g(\Theta_M)$ is the air gap distance at a given angle $\Theta_M$, and P is the number of magnetic poles on said magnetic disc (104;304).

17. A method of calculating an air gap distance between a magnetic field sensor (211) and an elongated magnetic body (210) of a linear position encoding apparatus so as to produce a magnetic field having a substantially sinusoidal characteristic at said sensor (211) as said magnetic body (210) moves past said sensor (211), said magnetic body (210) movable along a linear axis (204), comprising the steps of:

defining a maximum air gap distance $g_{max}$ from said sensor (211) to said magnetic body (210), a minimum air gap distance $g_{min}$ from said sensor to said magnetic body, and a desired sensor offset distance from said linear axis (204) to said sensor (211); defining a general air gap distance formula being a function of said maximum air gap distance and said minimum air gap distance, and such that said general air gap distance includes a sinusoidally varying component; holding said desired sensor offset distance constant while iterating said maximum air gap distance and said minimum air gap distance until said magnetic field exhibits substantially sinusoidal characteristic.

18. A method according to claim 17, further including the step of providing a general air gap distance formula of the form:

$$g(d_M) = (2\, g_{min}\, g_{max})/\{(g_{max} - g_{min})\sin(Pd_M) + (g_{max} + g_{min})\},$$

where $g(d_M)$ is the air gap distance at a given position offset distance $d_M$, and P is the number of magnetic poles on said magnetic body (210).

**Patentansprüche**

1. Vorrichtung zur Lieferung eines Ausgangssignals, das die momentane Position eines beweglichen Teils (102; 202; 302) entlang eines Bewegungsbereiches gegenüber einer Bezugsposition anzeigt, mit:

einem Magnet-Körper (104; 210; 304), der fest an dem beweglichen Teil (102; 202; 302) angebracht ist, wobei der Körper eine konturierte Oberfläche aufweist und ein Magnetfeld erzeugt; zumindest zwei Magnetfeld-Sensoren, wobei jeder der Sensoren (i) benachbart zu der konturierten Oberfläche des Magnet-Körpers (104; 210; 304) angeordnet ist, (ii) gegenüber der Bezugsposition festgelegt ist, und (iii) mit Abstand von dem anderen Sensor angeordnet ist, um einen ungleichförmigen Spalt zwischen der konturierten Oberfläche und jedem der Magnetfeld-Sensoren (116; 211; 316) zu bilden; Ausgangs-Einrichtungen (107; 202; 307), die elektrisch mit jedem der Magnetfeld-Sensoren (116; 211; 316) gekoppelt sind;

**dadurch gekennzeichnet, dass**:

die zumindest zwei Magnetfeld-Sensoren zumindest zwei unabhängige Sätze von Magnetfeld-Sensoren (116; 211; 316) einschließen, wobei jeder Satz zumindest zwei Sensoren umfasst, wobei jeder der Sensoren ein positionsabhängiges Signal erzeugt, das einem Wert des Magnetfeldes entspricht, und jeder unabhängige Satz von Sensoren elektrisch von den anderen Sätzen von Sensoren isoliert ist, um elektrisch redundante positionsabhängige Signale zu liefern;

die Ausgangseinrichtungen eine Decodierschaltung (107; 208; 307) bilden, die elektrisch mit jedem der Magnetfeld-Sensoren (116; 211; 316) gekoppelt ist, um jedes der positionsabhängigen Signale zu empfangen, wobei die Decodierschaltung (107; 208; 307) ein Ausgangssignal erzeugt, das die momentane Position des beweglichen Teils (102; 202; 302) gegenüber der Bezugsposition anzeigt.

2. Vorrichtung nach Anspruch 1, bei der der ungleichförmige Spalt so bemessen ist, dass das Magnetfeld-Sensor-Ausgangssignal sich als eine Funktion von sinX ändert, worin X eine lineare Funktion der Position des beweglichen Teils (102; 202; 302) gegenüber dem Bezugspunkt ist.

3. Vorrichtung nach Anspruch 1 oder 2, bei der der Magnet-Körper (104; 210; 304) N Magnetpole einschließt, wobei N eine ganze Zahl ist, die geradzahlig durch vier teilbar ist.

4. Vorrichtung nach einem der Ansprüche 1 bis 3, bei der der bewegliche Teil (102; 202; 302) und der Magnet-Körper (104; 210; 304) kombiniert sind, um ein einzelnes Magnetelement einzuschließen.

5. Vorrichtung nach einem der Ansprüche 1 bis 4, bei der der Magnet-Körper (104; 304) ein Ring ist, der sich mit dem beweglichen Teil (102; 202; 302) dreht.

6. Vorrichtung nach Anspruch 5, bei der die Magnet-Sensoren (116; 316) jeweils mit axialem Abstand von dem Ring angeordnet sind.

7. Vorrichtung nach einem der vorhergehenden Ansprüche, bei der jeder der Magnetfeld-Sensoren (116; 211; 316) weiterhin zumindest eine Einstellschraube (212) einschließt, die im Wesentlichen benachbart zu dem Magnetfeld-Sensor angeordnet ist, um mit dem Magnetfeld in Wechselwirkung zu treten, wobei sich das positionsabhängige Signal als eine vorgegebene Funktion eines relativen Abstandes von dem Magnetfeld-Sensor (116; 211; 316) zu der Einstellschraube (212 ändert.

8. Vorrichtung nach Anspruch 7, bei der die Einstellschraube (212) ein eine hohe magnetische Permeabilität aufweisendes Material einschließt.

9. Vorrichtung nach einem der vorhergehenden Ansprüche, bei der die Magnetfeld-Sensoren (116; 211; 316) lineare Hall-Effekt-Sensoren einschließen.

10. Vorrichtung nach einem der vorhergehenden Ansprüche, bei der:

i) der bewegliche Teil eine Welle (102; 302), die um eine Drehachse (114; 314) drehbar ist, und eine Scheibe (104; 304) einschließt, die einen Außenumfang aufweist, der durch einen ungleichförmigen Radius definiert ist, wobei die Scheibe (104; 304) fest an der Welle (102; 302) an einem Scheiben-Mittelpunkt derart befestigt ist, dass sich die Scheibe in einer Ebene im Wesentlichen senkrecht zu der Drehachse dreht, wobei der Magnetkörper fest an der Scheibe befestigt ist; und

ii) die Magnetfeld-Sensoren (116; 316) um den Außenumfang unter im Wesentlichen gleichen Radien bezüglich der Drehachse (114; 314) angeordnet sind.

11. Vorrichtung nach Anspruch 10, die weiterhin zwei Sätze von drei Magnetfeld-Sensoren (116; 316) einschließt, die unter Winkelabständen von im Wesentlichen gleich 120° angeordnet sind.

12. Vorrichtung nach Anspruch 11, bei der die vorgegebene Funktion der positionsabhängigen Signale eine Differenz zwischen zwei der Sensoren (115; 316) in jedem der Sätze von drei Magnetfeld-Sensoren einschließt, so dass im Wesentlichen ein 3N Oberwellen-Verzerrungs-Ausdruck kompensiert wird, wobei N eine ganze Zahl größer oder gleich eins ist.

**13.** Vorrichtung nach einem der Ansprüche 1 bis 9, bei der:

i) der bewegliche Teil (202) einen langgestreckten Körper (210) einschließt, der entlang einer linearen Achse (204) beweglich ist, wobei der langgestreckte Körper zumindest eine Außenoberfläche im Wesentlichen parallel zu der linearen Achse hat; und
ii) die Magnetfeld-Sensoren (211) unter im Wesentlichen gleichen radialen Abständen gegenüber der linearen Achse derart angeordnet sind, dass ein Spalt zwischen jedem Sensor (211) und der Außenoberfläche des lang gestreckten Körpers (211) gebildet ist, wenn sich der lang gestreckte Körper (210) entlang des Sensors (211) bewegt.

**14.** Vorrichtung nach einem der vorhergehenden Ansprüche, die weiterhin eine Messkorrektur (212) von Messfehlern einschließt, die durch eine fehlerhafte Position der Magnetfeld-Sensoren hervorgerufen werden.

**15.** Verfahren zur Berechnung eines Luftspalt-Abstandes zwischen einem Magnetfeld-Sensor (116; 316) und einer Magnetscheibe (104; 304) einer Drehstellungs-Codiervorrichtung derart, dass ein Magnetfeld mit einer im Wesentlichen sinusförmigen Charakteristik an dem Sensor (116; 316) erzeugt wird, während sich die Scheibe (104; 304) an dem Sensor vorbei bewegt, wobei die Scheibe einen Mittelpunkt und einen Umfang aufweist, und in einer Ebene angeordnet ist, wobei jeder Punkt auf dem Umfang durch einen Winkel $\Theta_M$ gemessen von einem Bezugsradius aus definiert ist, mit den folgenden Schritten:

Definieren eines maximalen Luftspalt-Abstandes $g_{max}$ von dem Sensor (116; 316) zu der Scheibe (104; 304), eines minimalen Luftspalt-Abstandes $g_{min}$ von dem Sensor zu der Scheibe, und einem Soll-Sensor-Radius von dem Mittelpunkt zu dem Sensor;
Definieren einer allgemeinen Luftspalt-Abstandsgleichung, die eine Funktion des maximalen Luftspalt-Abstandes und des minimalen Luftspalt-Abstandes ist, und derart, dass dieser allgemeine Luftspalt-Abstand eine sich sinusförmig ändernde Komponente einschließt;
Konstanthalten des Soll-Sensor-Radius, während eine Iteration des maximalen Luftspalt-Abstandes und des minimalen Luftspalt-Abstandes durchgeführt wird, bis das Magnetfeld die im Wesentlichen sinusförmige Charakteristik aufweist.

**16.** Verfahren nach Anspruch 5, das weiterhin den Schritt der Bereitstellung einer allgemeinen Luftspalt-Abstandsgleichung der Form:

$$g(\Theta_M) = (2\,g_{min}\,g_{max})/(g_{max} - g_{min})\sin(P\,\Theta_M) + (g_{max} + g_{min})$$

einschließt, worin $g(\Theta_M)$ der Luftspalt-Abstand bei einem vorgegebenen Winkel $\Theta_M$ und P die Anzahl von Magnetpolen auf der Magnetscheibe (104; 304) ist.

**17.** Verfahren zur Berechnung eines Luftspalt-Abstandes zwischen einem Magnetfeld-Sensor (211) und einem langgestreckten Magnet-Körper (210) einer linearen Positions-Codiervorrichtung derart, dass ein Magnetfeld mit einer im Wesentlichen sinusförmigen Charakteristik an dem Sensor (211) erzeugt wird, während sich der Magnetkörper (210) an dem Sensor (211) vorbei bewegt, wobei der Magnetkörper (210) entlang einer linearen Achse (204) beweglich ist, mit den folgenden Schritten:

Definieren eines maximalen Luftspalt-Abstandes $g_{max}$ von dem Sensor (211) zu dem Magnetkörper (210), eines minimalen Luftspalt-Abstandes $g_{min}$ von dem Sensor zu dem Magnetkörper und eines Soll-Sensor-Offset-Abstandes von der linearen Achse (204) zu dem Sensor (211);
Definieren einer allgemeinen Luftspalt-Abstands-Gleichung, die eine Funktion des maximalen Luftspalt-Abstandes und des minimalen Luftspalt-Abstandes ist, und derart, dass der allgemeine Luftspalt-Abstand eine sich sinusförmig ändernde Komponente einschließt;
Halten des Soll-Sensor-Offset-Abstandes auf einem konstanten Wert, während eine Iteration des maximalen Luftspalt-Abstandes und des minimalen Luftspalt-Abstandes durchgeführt wird, bis das Magnetfeld eine im wesentlichen sinusförmige Charakteristik aufweist.

**18.** Verfahren nach Anspruch 17, das weiterhin den Schritt der Bereitstellung einer allgemeinen Luftspalt-Abstandsgleichung der folgenden Form einschließt:

$$g(d_M) = (2\,g_{min}\,g_{max})/(g_{max}-g_{min})\sin(Pd_M) + (g_{max} + g_{min})$$

worin g(d sub M) der Luftspalt-Abstand in einem vorgegebenen Positions-Offset-Abstand dM ist, und P die Anzahl von Magnetpolen auf dem Magnetkörper (210) ist.

**Revendications**

**1.** Appareil de fourniture d'une sortie indiquant la position instantanée d'un organe mobile (102 ; 202 ; 302) sur une plage de déplacement par rapport à une position de référence, comprenant :

un corps aimanté (104 ; 210 ; 304) attaché fixement audit organe mobile (102 ; 202 ; 302), ledit corps présentant une surface profilée et produisant un champ magnétique ;
au moins deux capteurs de champ magnétique, chacun desdits capteurs étant (i) disposé de manière adjacente à ladite surface profilée dudit corps aimanté (104 ; 210 ; 304), (ii) fixe par rapport à ladite position de référence, et (iii) positionné à part de l'autre capteur, de manière à former un espace non uniforme entre ladite surface profilée et chacun desdits capteurs de champ magnétique (116 ; 211 ; 316);
des moyens de sortie (107 ; 208 ; 307) couplés électriquement à chacun desdits capteurs de champ magnétique (116 ; 211 ; 316)

**caractérisé en ce que** :

lesdits au moins deux capteurs de champ magnétique comprennent au moins deux ensembles indépendants de capteurs de champ magnétique (116 ; 211 ; 316), chaque ensemble comprenant au moins deux capteurs, dans lequel chacun desdits capteurs produit un signal en fonction de la position correspondant à une valeur dudit champ magnétique et chaque ensemble de capteurs indépendants est isolé électriquement des autres ensembles de capteurs de manière à fournir des signaux en fonction de la position électriquement redondants ;
lesdits moyens de sortie formant un circuit de décodage (107 ; 208 ; 307) couplés électriquement à chacun desdits capteurs de champ magnétique (116 ; 211 ; 316) de manière à recevoir chacun desdits signaux en fonction de la position, ledit circuit de décodage (107 ; 208 ; 307) produisant une sortie indiquant la position instantanée de l'organe mobile (102 ; 202 ; 302) par rapport à la position de référence.

**2.** Appareil selon la revendication 1, ledit espace non uniforme étant conçu sur mesure de sorte que le signal de sortie du capteur de champ magnétique varie en fonction de sinX, où X est une fonction linéaire de ladite position dudit organe mobile (102 ; 202 ; 302) par rapport audit point de référence.

**3.** Appareil selon la revendication 1 ou 2, ledit corps aimanté (104 ; 210 ; 304) comprenant N pôles magnétiques, où N est un entier divisible par quatre.

**4.** Appareil selon l'une quelconque des revendications 1 à 3, dans lequel ledit organe mobile (102 ; 202 ; 302) et ledit corps aimanté (104 ; 210 ; 304) sont combinés de manière à comprendre un seul organe aimanté.

**5.** Appareil selon l'une quelconque des revendications 1 à 4, dans lequel le corps aimanté (104 ; 304) est un anneau qui tourne avec l'organe mobile (102 ; 302).

**6.** Appareil selon la revendication 5, dans lequel les capteurs magnétiques (116 ; 316) sont individuellement espacés axialement de l'anneau.

**7.** Appareil selon l'une quelconque des revendications précédentes, chacun desdits capteurs de champ magnétique (116 ; 211 ; 316) comprenant en outre au moins une vis d'ajustement (212) disposée de manière sensiblement adjacente audit capteur de champ magnétique de manière à interagir avec ledit champ magnétique, dans lequel ledit signal en fonction de la position varie comme une fonction prédéterminée d'une distance relative entre ledit capteur de champ magnétique (116 ; 211 ; 316) et ladite vis d'ajustement (212).

**8.** Appareil selon la revendication 7, dans lequel ladite vis d'ajustement (212) comprend un matériau à perméabilité magnétique élevée.

**9.** Appareil selon l'une quelconque des revendications précédentes, dans lequel lesdits capteurs de champ magnétique (116 ; 211 ; 316) comprennent des capteurs à effet Hall linéaires.

**10.** Appareil selon l'une quelconque des revendications précédentes, dans lequel

i) ledit organe mobile comprend un arbre rotatif (102 ; 302) autour d'un axe de rotation (114 ; 314) et un disque (104 ; 304) présentant une périphérie externe définie par un rayon non uniforme, ledit disque (104 ; 304) étant attaché de manière fixe audit arbre (102 ; 302) au niveau d'un centre de disque de telle sorte que ledit disque tourne dans un plan sensiblement normal audit axe de rotation, ledit corps aimanté étant attaché de manière fixe audit disque ; et
ii) lesdits capteurs de champ magnétique (116 ; 316) sont disposés autour de ladite périphérie externe à des rayons sensiblement égaux par rapport audit axe de rotation (114 ; 314).

**11.** Appareil selon la revendication 10, comprenant en outre deux ensembles de trois capteurs de champ magnétique (116 ; 316) disposés à des intervalles angulaires sensiblement égaux à 120 degrés.

**12.** Appareil selon la revendication 11, dans lequel ladite fonction prédéterminée desdits signaux en fonction de la position comprend une différence entre deux desdits capteurs (116 ; 316) dans l'un desdits ensembles de trois capteurs de champ magnétique, de manière à annuler sensiblement un terme de distorsion harmonique de 3N, N étant un entier supérieur ou égal à un.

**13.** Appareil selon l'une quelconque des revendications 1 à 9, dans lequel

i) ledit organe mobile (202) comprend un corps allongé (210) mobile sur un axe linéaire (204), ledit objet allongé ayant au moins une surface extérieure sensiblement parallèle audit axe linéaire ; et
ii) lesdits capteurs de champ magnétique (211) sont disposés à des distances radiales sensiblement égales par rapport audit axe linéaire de telle sorte qu'un espace est formé entre chaque capteur (211) et la surface extérieure du corps allongé (210) lorsque le corps allongé (210) se déplace au-delà du capteur (211).

**14.** Appareil selon l'une quelconque des revendications précédentes, comprenant en outre une correction de mesure (212) des erreurs de mesure provoquées par un emplacement incorrect des capteurs de champ magnétique.

**15.** Procédé de calcul d'une distance d'espace aérien entre un capteur de champ magnétique (116 ; 316) et un disque magnétique (104 ; 304) d'un appareil de codage de position rotatif, de manière à produire un champ magnétique présentant une caractéristique sensiblement sinusoïdale au niveau dudit capteur (116 ; 316) lorsque ledit disque tourne (104 ; 304) au-delà dudit capteur, ledit disque ayant un centre et un périmètre, et étant disposé dans un plan, chaque point sur ledit périmètre étant défini par un angle $\Theta_M$ mesuré à partir d'un rayon de référence, comprenant les étapes consistant à :

définir une distance d'espace aérien maximale $g_{max}$ entre ledit capteur (116 ; 316) et ledit disque (104 ; 304), une distance d'espace aérien minimale $g_{min}$ entre ledit capteur et ledit disque et un rayon de capteur souhaité entre ledit centre et ledit capteur ;
définir une formule de distance d'espace aérien générale en fonction de ladite distance d'espace aérien maximale et de ladite distance d'espace aérien minimale et de telle sorte que ladite distance d'espace aérien générale comprenne une composante variant de manière sinusoïdale ;
maintenir ledit rayon de capteur souhaité constant tout en formulant par itération ladite distance d'espace aérien maximale et ladite distance d'espace aérien minimale jusqu'à ce que ledit champ magnétique présente ladite caractéristique sensiblement sinusoïdale.

**16.** Procédé selon la revendication 15, comprenant en outre l'étape consistant à élaborer une formule de distance d'espace aérien générale sous la forme :

$$g(\Theta_M) = (2\, g_{min}\, g_{max}) / \{(g_{max} - g_{min})\sin(P\Theta_M) + (g_{max} + g_{min})\},$$

où $g(\Theta_M)$ est la distance d'espace aérien selon un angle $\Theta_M$ donné et P est le nombre de pôles magnétiques sur ledit disque magnétique (104 ; 304).

**17.** Procédé de calcul d'une distance d'espace aérien entre un capteur de champ magnétique (211) et un corps aimanté allongé (210) d'un appareil de codage de position linéaire de façon à produire un champ magnétique ayant une caractéristique sensiblement sinusoïdale au niveau dudit capteur (211) lorsque ledit corps aimanté (210) se déplace au-delà dudit capteur (211), ledit corps aimanté (210) étant mobile sur un axe linéaire (204), comprenant les étapes consistant à :

définir une distance d'espace aérien maximale $g_{max}$ entre ledit capteur (211) et ledit corps aimanté (210), une distance d'espace aérien minimale $g_{min}$ entre ledit capteur et ledit corps aimanté et une distance de décalage de capteur souhaitée entre ledit accès linéaire (204) et ledit capteur (211) ;

définir une formule de distance d'espace aérien générale en fonction de ladite distance d'espace aérien maximale et de ladite distance d'espace aérien minimale, de telle sorte que la distance d'espace aérien générale comprenne une composante variant de manière sinusoïdale ;

maintenir ladite distance de décalage de capteur souhaitée constante tout en formulant par itération ladite distance d'espace aérien maximale et ladite distance d'espace aérien minimale jusqu'à ce que ledit champ magnétique présente une caractéristique sensiblement sinusoïdale.

**18.** Procédé selon la revendication 17, comprenant en outre l'étape consistant à élaborer une formule de distance d'espace aérien générale sous la forme :

$$g(d_M) = (2\ g_{min}\ g_{max})/\{(g_{max} - g_{min})\sin(Pd_M) + (g_{max} + g_{min})\}.$$

où $g(d_M)$ est la distance d'espace aérien au niveau d'une distance de décalage de position donnée $d_M$ et P est le nombre de pôles magnétiques sur ledit corps magnétique (210).

EP 1 016 852 B1

108

110

116                              116

$H_{B3}$                         $H_{A1}$

106                                   104

N

106

116                                   116

$H_{B2}$          S          S       $\theta_M$

102                                 $H_{A2}$

N

110                                   110

116                                   116

$H_{B1}$                    $H_{A3}$

116

120

107

FIG. 1A

108

110    106

116    $H_{B3}$

112

102    114

$H_{B2}$

112

110    104

110

$H_{B1}$

116

107

FIG. 1B

FIG. 2

EP 1 016 852 B1

FIG. 3B

FIG. 3A

**EP 1 016 852 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2143328 A
- DE 3339162 A
- US 55159268 A
- WO 9735793 A
- US 5363034 A
- US 5162798 A